# EUROPÄISCHE PATENTSCHRIFT

(11) **EP 2 927 879 B1**
(45) Veröffentlichungstag und Bekanntmachung des Hinweises auf die Patenterteilung: **09.12.2020**
(21) Anmeldenummer: 14163432.9
(22) Anmeldetag: 03.04.2014
(51) Int. Cl.: G07B 15/06, H04W 4/46, H04L 29/08, H04W 4/02

(54) **Verfahren zur Erfassung der streckenabhängigen Benutzung von Fahrzeugen**
Method for detecting the distance-dependent usage of vehicles
Procédé de détection de l'utilisation de véhicules en fonction de la distance

(43) Veröffentlichungstag der Anmeldung: 07.10.2015
(73) Patentinhaber: Scheidt & Bachmann GmbH, 41238 Mönchengladbach (DE)
(72) Erfinder: Dr. Norbert Miller, 41063 Mönchengladbach (DE)
(74) Vertreter: Rausch Wanischeck-Bergmann Brinkmann

(56) Entgegenhaltungen:
- EP-A1- 1 519 320
- EP-A1- 2 530 654
- EP-A1- 2 860 703
- EP-A2- 0 784 297
- EP-A2- 2 508 466
- WO-A1-01/11572
- WO-A1-02/084612
- WO-A2-2013/190566
- US-A1- 2003 105 662
- US-A1- 2007 096 912
- US-A1- 2013 006 724
- US-A1- 2014 025 444
- US-B1- 8 311 559

## Beschreibung

Die Erfindung betrifft ein Verfahren zur Erfassung der streckenabhängigen Benutzung von Fahrzeugen. Derartige Verfahren werden beispielsweise bei Mauterhebungssystemen zur Erhebung einer benutzungsabhängigen Maut für beispielsweise Personenkraftwagen, bei Mietwagen, Carsharing und dergleichen eingesetzt.

Ein bevorzugter Einsatz eines gattungsgemäßen Verfahrens ist bei Mautsystemen.

Mautsysteme für Straßen sind dem Grunde nach bekannt.

Es gibt benutzungsunabhängige Systeme, bei denen eine Maut für einen bestimmten Zeitraum erhoben (z.B. Woche, Monat oder Jahr) und Zugang zu mautpflichtigen Straßen für den vorausbezahlten Zeitraum gewährt wird, unabhängig von der Nutzungshäufigkeit. Das Nutzungsrecht ist bei diesen Systemen nicht zwischen verschiedenen Fahrzeugen übertragbar und wird dokumentiert durch einen fest mit dem Fahrzeug verbundenen Zahlungsnachweis, der von außerhalb des Fahrzeugs optisch inspiziert werden kann und der sich selbst zerstört, wenn man versucht, ihn vom Fahrzeug zu lösen ("Vignette").

Ferner gibt es benutzungsabhängige Systeme, bei denen die Maut im Wesentlichen streckenabhängig erhoben wird. Die klassische Lösung hierfür sind Mautstationen an Zu- und Abfahrten von Mautstrecken, bei denen der Fahrer des mautpflichtigen Fahrzeugs an der Zufahrt ein Ticket erhält, welches er bei Erreichen der gewünschten Abfahrt bezahlt. Das System ist insofern aufwendig, als es an viel befahrenen Strecken große Mautstationen braucht, um die Ausgabe der Tickets und das Bezahlen der Maut auch bei großem Verkehrsaufkommen in akzeptabler Zeit durchzuführen. Darüber hinaus muss für dieses System jede Zufahrt und Abfahrt mit Mautstationen versehen sein.

Eine Weiterentwicklung der Mautstationen ist die "Schnellspur", auf der registriere Nutzer (Fahrzeuge) ohne anzuhalten eine Mautstation passieren können. Dabei befindet sich im Fahrzeug eine kontaktlos auslesbare wide-range Transponderkarte, die von einer Ausleseeinheit über oder seitlich der Schnellspur an der Mautstation kontaktlos ausgelesen wird. Damit ist im Mauterhebungssystem bekannt, wann und wo welche Transponderkarte die mautpflichtige Strecke betreten und verlassen hat, so dass zur benutzten Transponderkarte eine Maut ermittelt und mit einem hinterlegten Konto verrechnet werden kann.

Aus EP784297A1 ist ein Mautsystem bekannt, bei dem zwischen einer Mautstelle und einem in einem Fahrzeug befindlichen mobilen Endgerät Durchfahrtsdaten ausgetauscht werden, die zur automatisierten Mauterhebung verwendet werden. Die Durchfahrtsdaten werden an den Mautstellen der Ein- und Ausfahrten gespeichert und in einem Zentralsystem abgerechnet. Das mobile Endgerät kann ein Telefon sein.

Aus JP120504/1993 ist ein Mauterhebungssystem bekannt, bei dem in eine tragbare Fahrzeugeinheit eine Kreditkarte eingesteckt wird. Die Fahrzeugeinheit ist in der Lage, drahtlos mit Mautstationen zu kommunizieren und sendet abrechnungsrelevante Daten - einschließlich der Kreditkartennummer - bei der Ein- und Ausfahrt jeweils an die Mautstation. Die Fahrtdaten werden von einem zentralen Rechner abgerechnet.

Aus US2010032479A1 ist eine weitere Methode zur Mautzahlung bekannt: Eine elektronische Mauteinheit in einem Fahrzeug gibt Informationen bezüglich zu zahlender Maut und bezüglich eines registrierten Fahrzeugs an ein mobiles Kommunikationsterminal. Das System basiert auf dem Prinzip von stationären Mautstellen. Sobald diese durchfahren werden, wird das Fahrzeug vermessen und dann die zu zahlende Maut berechnet wird. Anschließend wird der Zahlungsvorgang durchgeführt.

US2004212518A1 beschreibt eine Methode, den Nutzer eines Mauterhebungssystem, welches mit Vorauszahlungen ("prepaid accounts") arbeitet, beim Passieren von Mautstellen über den aktuellen Stand seines Mautkontos zu informieren. Dazu arbeiten ein Fahrzeugnavigationssystem und ein Kommunikationsterminal im Fahrzeug dergestalt zusammen, dass das Navigationssystem anhand von hinterlegten Kartendaten das Passieren einer Mautstelle erkennt, über das Kommunikationsterminal eine Anfrage an das Mauterhebungssystem absetzt und - wiederum über das Kommunikationsterminal - den Kontostand mitgeteilt bekommt und zur Anzeige bringt. Nach heutigen technischen Maßstäben können Fahrzeugnavigationssystem und Kommunikationsterminal zusammen von einem Smartphone ersetzt werden.

Den zuvor beschriebenen Verfahren und Systemen ist gemeinsam, dass die Mauterhebung in allen Fällen durch das Passieren von Mauterhebungsstellen ausgelöst ist. Dies ist insbesondere in relativ dicht besiedelten Ländern mit vielen Autobahnauf- und -abfahrten aus Raum- und Kostengründen problematisch.

Weiter bekannt ist das Toll-Collect-System für Lastkraftwagen (LKW) in Deutschland. Bevorzugter Weg für die Mauterhebung in Toll-Collect ist die vollautomatische Abrechnung durch den Einsatz des GPS-Systems, die den Einbau von sogenannten On-Board-Units (OBU) in LKW erforderlich macht. Mit dem Start des LKW schaltet sich die OBU ein und lokalisiert die Position des Fahrzeugs mittels Satellitennavigation. Anhand der Position und in der OBU gespeicherter Streckendaten kann die OBU nun bestimmen, ob auf der Fahrstrecke Mautpflicht besteht. Die dabei gesammelten Daten werden per Mobilfunk in ein Rechenzentrum übermittelt und dort für die Rechnungsstellung verarbeitet. Um zu verhindern, dass Mautzahlungen unterschlagen werden (z. B. durch einfaches Ausschalten der OBUs), werden zum einen LKW an den ca. 300 Mautbrücken fotografiert, zum anderen durch ca. 450 mobile Kontrollstellen überprüft. Die gewonnenen Daten werden mit den Daten im Zentralcomputer abgeglichen und ggf. entsprechende Maßnahmen eingeleitet. Durch dieses Verfahren können der Raum- und Kostenbedarf für die Mauterhebungsstellen eingespart werden.

Eine benutzungsabhängige Mauterhebung mittels des Toll-Collect-Verfahrens scheitert jedoch für normale PKW daran, dass die Kosten für eine On-Board-Unit und ihren Einbau in die jeweilige Fahrzeuginfrastruktur für die Gesamtheit aller PKW zu hoch sind.

Die WO 02/084612 A1 betrifft ein System zur Bestimmung streckenabhängiger Straßennutzungsgebühren. Dabei kommt ein Endgerät zum Einsatz, welches an einem zellularen Telekommunikationssystem teilnimmt. Es ist vorgesehen, dass das Endgerät durch Ausschalten des Antriebs eines Fahrzeugs ebenfalls ausgeschaltet wird. Außerdem ist das Endgerät über eine Schnittstelle mit der Fahrzeugelektronik verbunden Es handelt sich bei diesem Endgerät um ein stationär in das Fahrzeug integriertes Endgerät, vergleichbar mit einer On-Board-Unit, mit dessen Hilfe Standortdaten des Endgeräts an das zellulare Telekommunikationsnetz gesendet, dort gespeichert, und mit Hilfe eines Berechnungsmittels werden Straßennutzungsgebühren berechnet.

Die EP 2 508 466 A2 betrifft ein Flurförderfahrzeug mit einer Datenerfassungsvorrichtung. Die Datenerfassungsvorrichtung erfasst Betriebsdaten des Flurförderfahrzeugs wie den Kilometerstand oder die Betriebsstunden. Es ist eine Fahrzeugschnittstelle vorgesehen, mit welcher die Betriebsdaten aus der Datenerfassungsvorrichtung ausgegeben werden können. Die Fahrzeugschnittstelle kann eine funkbasierte Schnittstelle sein, beispielsweise eine Bluetooth- oder GSM-Schnittstelle. Sinn und Zweck der Fahrzeugschnittstelle ist es nun, die Betriebsdaten vom Flurförderfahrzeug entweder an eine mobile Datenaufnahmeeinrichtung oder alternativ an eine stationäre Datenaufnahmeeinrichtung zu übermitteln.

Die EP 2 530 654 A1 schließlich offenbart die Verwendung eines fest im Fahrzeug installierten Transponders. Dieser Transponder ist in der Lage, auf Anfragesignal Fahrzeugidentifikationsdaten repräsentierende Informationen an die abfragende Einheit zurückzusenden. Ein im Fahrzeug installiertes Endgerät, welches auch in andere Fahrzeuge installiert werden kann, fragt vom Transponder die Fahrzeugidentifikationsdaten ab und speichert diese. Damit ist das mobile Endgerät auf das konkrete betroffene Fahrzeug "initialisiert". Fortan agiert das mobile Endgerät, indem es Positionsdaten erfasst, diese mit dem gespeicherten Fahrzeuginformationswert kombiniert und daraus Gebühreninformationen errechnet. Die Datenvorrichtung ist dabei im Wesentlichen passiv.

Es ist daher die **Aufgabe** der vorliegenden Erfindung, ein gattungsgemäßes Verfahren dahingehend weiterzuentwickeln, dass die streckenabhängige Benutzung von Fahrzeugen, insbesondere mautstreckenabhängige Benutzung von Fahrzeugen bei gleichzeitig geringem Raumbedarf in der Infrastruktur und insgesamt geringen Kosten erfasst werden kann.

Zur **Lösung** schlägt die Erfindung ein Verfahren mit den Merkmalen des Anspruch 1 vor. Weitere Vorteile und Merkmale ergeben sich aus den Unteransprüchen 2 bis 5. Zudem schlägt die Erfindung eine Vorrichtung mit den Merkmalen des Anspruch 6 vor. Weitere Vorteile und Merkmale ergeben sich aus den darauf folgenden Unteransprüchen.

Die Erfindung sieht vor, dass eine datentechnische Kommunikationsverbindung zwischen einem vom Benutzer mitgeführten mobilen Endgerät und einer fest im Fahrzeug installierten Datenvorrichtung hergestellt wird, wobei vom mobilen Endgerät bereitgestellte Positionsdaten und von der Datenvorrichtung bereitgestellte Fahrzeugidentifikationsdaten miteinander in der Datenvorrichtung zu einem gemeinsamen Datensatz kombiniert werden, wobei der gemeinsame Datensatz vom mobilen Endgerät an ein Hintergrundsystem übertragen wird.

Bei dem mobilen Endgerät kann es sich beispielsweise um ein Smartphone, einen Tabletcomputer, ein Notebook oder dergleichen handeln. Der Clou der Erfindung besteht nun darin, dass die Erfassung der streckenabhängigen Benutzung eines Fahrzeugs dem Grunde nach fast vollständig unter Ausnutzung der Funktionalität des mobilen Endgeräts erfolgen kann. Dadurch kann der Benutzer eines erfindungsgemäßen Systems sein ohnehin vorhandenes und meist mitgeführtes mobiles Endgerät verwenden, um an einem System zur Erfassung der streckenabhängigen Benutzung von Fahrzeugen teilzunehmen.

Der Einsatz von von den Benutzern mitgeführten mobilen Endgeräten ist keineswegs trivial. Die bloße Verwendung von mobilen Endgeräten bringt nämlich das Problem mit sich, dass eine Verknüpfung der erfassten Daten über eine streckenabhängige Benutzung nicht sicher an das jeweilige Fahrzeug oder den jeweiligen Zahlungspflichtigen geknüpft ist. Dieses Teilproblem löst die Erfindung dadurch, dass das mobile Endgerät mit einer fest im Fahrzeug installierten Datenvorrichtung kommuniziert. Es wird eine datentechnische Kommunikationsverbindung hergestellt, beispielsweise durch Bluetooth, ein WLAN und/oder dergleichen.

Die Datenvorrichtung ist fest im Fahrzeug installiert. Dies meint, dass Sie nicht ohne weiteres aus dem Fahrzeug entfernt werden kann. Die Datenvorrichtung kann mit einem Mittel zur Befestigung in einem Fahrzeug ausgestattet sein, wobei das Mittel derart ausgebildet ist, dass beim Lösen des Mittels zumindest ein für einen bestimmungsgemäßen Betrieb der Datenvorrichtung erforderliches Bauteil zerstört wird. Hierbei kann es sich beispielsweise um einen Speicherchip der Datenvorrichtung und/oder dergleichen handeln. Die Datenvorrichtung ist somit hinsichtlich einer bestimmungsgemäßen Funktion irreversibel mit dem Fahrzeug verbunden. Ein zerstörungsfreies Entfernen der Datenvorrichtung ist insbesondere auch nicht mittels Werkzeugen, Schlüsseln und/oder dergleichen möglich.

Die Datenvorrichtung hat den Sinn und Zweck, Fahrzeugidentifikationsdaten bereitzustellen.

Bei Fahrzeugidentifikationsdaten handelt es sich um eine eineindeutige Kennung. Dadurch kann jedes Fahrzeug datentechnisch individualisiert werden. Die Fahrzeugidentifikationsdaten können in einem Speicher der Datenvorrichtung gespeichert sein. Hierbei kann es sich insbesondere um einen sogenannten Write-Once, Read-Many (WORM) Speicher handeln. Dies erhöht die Manipulationssicherheit.

Erfindungsgemäß stellt das mobile Endgerät Positionsdaten bereit. Die Positionsdaten können durch ein GPS Signal, Beschleunigungssensoren, Drehratensensoren, eine Art WLAN-Karte und/oder dergleichen generiert werden. Es ist insbesondere auch möglich, die Daten mehrerer verschiedener Sensoren zu fusionieren, beispielsweise mittels Kalman-Filter und dergleichen.

Erfindungsgemäß werden die Positionsdaten mit den Fahrzeugidentifikationsdaten der Datenvorrichtung zu einem gemeinsamen Datensatz kombiniert. Hierzu werden die Positionsdaten des mobilen Endgeräts in den Speicher der Datenvorrichtung übertragen und/oder die Fahrzeugidentifikationsdaten der Datenvorrichtung in den Speicher des mobilen Endgeräts übertragen. Durch die Verknüpfung einzelner Daten zu dem gemeinsamen Datensatz ist sichergestellt, dass gezielt die Bewegung und somit eine streckenabhängige Benutzung des mit der jeweiligen Datenvorrichtung ausgestatteten Fahrzeugs berechnen zu können.

Erfindungsgemäß wird der generierte Datensatz vom mobilen Endgerät an ein Hintergrundsystem übertragen. Die Erfindung macht sich somit vorteilhafterweise zunutze, dass mit dem mobilen Endgerät bereits ein Internet-fähiges Gerät vorhanden ist.

Der erfindungsgemäße Clou liegt wie bereits erwähnt darin, dass die meisten, für die Erfassung einer streckenabhängigen Benutzung von Fahrzeugen erforderlichen Komponenten und Funktionalitäten bereits durch ein mobiles Endgerät bereitgestellt werden. Die Problematik, dass ein mobiles Endgerät alleine nicht manipulationssicher ist und nicht unter allen Umständen eine Anbindung der erhobenen Daten an das Fahrzeug bzw. eine zahlungspflichtige Person sicherstellt, wird erfindungsgemäß durch die Datenvorrichtung gelöst. Die Datenvorrichtung kann hierbei in besonders einfacher und auch kostengünstiger Weise ausgebildet werden. Sie muss im einfachsten Fall lediglich eine Kommunikationsschnittstelle zur Kommunikation mit dem mobilen Endgerät sowie einen Speicher für die zu verknüpfenden Fahrzeugidentifikationsdaten aufweisen.

Mit der Erfindung wird somit ein Verfahren offenbart, mit welchem in sehr einfacher und kostengünstiger Weise eine streckenabhängige Benutzung von Fahrzeugen erfasst werden kann, wobei zudem keine Mauterhebungsstellen und/oder dergleichen vorgesehen sein müssen. Im Unterschied zum bekannten Toll-Collect-Verfahren sind die Kosten für im Fahrzeug mitzuführende Geräte deutlich verringert. Eine Datenvorrichtung bringt nur einen Bruchteil der Herstellungskosten einer bekannten On-Board-Unit mit sich.

Gemäß einer vorteilhaften Weiterbildung der Erfindung wird eine bestimmungsgemäße Kommunikationsverbindung zwischen dem mobilen Endgerät und der Datenvorrichtung durch die Datenvorrichtung signalisiert. Hierzu kann die Datenvorrichtung beispielsweise eine Leuchtdiode aufweisen. Sofern die Datenvorrichtung an der Frontscheibe eines Fahrzeugs angeordnet ist, kann die Signalisierung von außen erfasst werden. Hierdurch wird ein weiteres, der vorliegenden Erfindung zu Grunde liegendes Teilproblem gelöst, nämlich das eine ordnungsgemäße Teilnahme am Erfassungsverfahren von außen geprüft werden kann. Im Falle eines Mautsystems kann somit, beispielsweise durch mobile Prüfstationen, die ordnungsgemäße Nutzung der Mauterfassung überprüft werden.

Neben den genannten, wesentlichen Merkmalen, werden im Folgenden weitere Merkmale der Erfindung und vorteilhafte Weiterbildungen beschrieben.

Die Erfindung stellt ein Verfahren und eine in ein Fahrzeug einzubauende Datenvorrichtung vor, mittels derer ein mobiles Endgerät - wie z.B ein Smartphone - datentechnisch derart an ein Fahrzeug angebunden wird, dass es zu einer funktionssicheren und überprüfbaren Mauterfassung im Fahrzeug genutzt werden kann.

Besonders vorteilhaft ist dabei, dass die erfindungsgemäße Datenvorrichtung völlig ohne Anbindung an die technische Fahrzeuginfrastruktur in das Fahrzeug eingebaut werden kann, da sie energetisch autark ist und datentechnisch drahtlos arbeitet.

Darüber hinaus ist die erfindungsgemäße Datenvorrichtung einfach aufgebaut und in großen Stückzahlen preiswert herzustellen, so dass einem breiten Einsatz zur Mauterfassung für PKW keine hohen Kosten im Wege stehen.

Mit der Erfindung wird verfahrensseitig vorgeschlagen, in einem Fahrzeug - insbesondere einem Personenkraftwagen (PKW) - an der Innenseite einer Scheibe eine Datenvorrichtung anzubringen, welche mit einem im Fahrzeug mitgeführten mobilen Endgerät über eine Datenverbindung datentechnisch verbunden ist. Die Datenverbindung kann gemäß dem Bluetooth-Standard funktionieren, aber auch jede andere Datenverbindung mit einem im Innenraum des Fahrzeugs befindlichen mobilen Endgerät ist im Sinne der Erfindung nutzbar.

Die Datenvorrichtung wird dabei so an einer der Scheibe des Fahrzeugs befestigt, dass sie von außerhalb des Fahrzeugs sichtbar ist.

Auf dem mobilen Endgerät ist erfindungsgemäß eine mobile Applikation (App) in Betrieb, welche mittels vom Global Positioning System GPS empfangener Signale den globalen Standort des mobilen Endgeräts - und damit des Fahrzeugs - ermittelt. Nutzbar ist das erfindungsgemäße Verfahren natürlich auch mit mobilen Endgeräten, welche auf andere, künftig verfügbare Standortbestimmungssysteme zurückgreifen, wie z.B. auf das im Aufbau befindlichen Galileo-System.

Die Datenvorrichtung ist im erfindungsgemäßen Mauterfassungssystem als zum Fahrzeug gehörig registriert; im System sind zu jeder Datenvorrichtung eine systemweit eineindeutige Identifikation, z.B. das Kraftfahrzeug-Kennzeichen und/oder eine weiterer eineindeutiger Kenner, und Zahlungsmittel - wie eine Bankverbindung oder eine Kreditkartennummer - hinterlegt. Diese Informationen werden im Hintergrundsystem des Mauterfassungssystems vorgehalten und zur Abrechnung der Maut genutzt.

Wenn nun das mobile Endgerät mit der eingeschalteten App in Betrieb ist, dann sendet es über seine Datenschnittstelle Daten. Wenn das mobile Endgerät sich dabei im Fahrzeug befindet, dann können diese Daten von der Datenvorrichtung empfangen werden.

Die Daten, die vom mobilen Endgerät an die Datenvorrichtung gesendet werden, beinhalten dabei wenigstens Positionsdaten gemäß GPS oder anderer Standortbestimmungssysteme und vorzugsweise einen Zeitstempel mit Datum und Uhrzeit zu jedem Positionsdatensatz.

Aus Gründen des Energiehaushalts empfängt die Datenvorrichtung erfindungsgemäß dabei nicht ununterbrochen Daten. Nur dann, wenn das Fahrzeug in Bewegung ist, empfängt die Datenvorrichtung alle rund 10 bis 120 Sekunden wenigstens einen Datensatz (mit Positionsdaten und Zeitstempel) vom mobilen Endgerät. Mittels eines Bewegungssensors ist die Datenvorrichtung dabei in der Lage, zwischen den Zuständen "fahrend" und "nicht-fahrend" zu unterscheiden und überhaupt nur dann Daten zu empfangen, wenn sich das Fahrzeug bewegt.

Die Datenvorrichtung speichert die von dem mobilen Endgerät empfangen Daten zusammen mit ihrer eigenen Identitätsnummer, so dass alle Datensätze als zu dieser Datenvorrichtung gehörig - und damit als zum Fahrzeug gehörig - in der Datenvorrichtung gespeichert sind.

Sobald die Datenvorrichtung eine bestimmte Anzahl neuer Datensätze vom mobilen Endgerät empfangen hat, sendet sie diese neue Datensätze (nun versehen mit der eineindeutigen Identitätsnummer der Datenvorrichtung) über die Datenschnittstelle an das mobile Endgerät zurück. Das mobile Endgerät leitet diese Datensätze über ein mobiles Datennetz an das Hintergrundsystem weiter.

Am Hintergrundsystem liegen nun Bewegungsdaten für die Datenvorrichtung vor- und zwar ein Datensatz für alle rund 10 bis 120 Sekunden. Da das Fahrzeug als zur Datenvorrichtung gehörig registriert ist, ist am Hintergrundsystem nun die Bewegung des Fahrzeugs bekannt, und es kann im Hintergrundsystem die Fahrt des Fahrzeugs zusammengesetzt werden und ermittelt werden, ob und wann welche mautpflichtigen Strecken benutzt wurden. Daraus errechnet das Hintergrundsystem die Mautbeträge und verrechnet sie mit den hinterlegten Zahlungsmitteln.

In einer weiteren Ausführungsform werden die Bewegungsdaten nicht am Hintergrundsystem zu Fahrten zusammengesetzt, sondern das mobile Endgerät kennt nicht nur seine eigene Position, sondern ermittelt daraus mittels gespeicherter Kartendaten, ob es auf einer mautpflichtigen Straße unterwegs ist. Es werden jetzt nicht nur Positionsdaten und Zeitstempel im mobilen Endgerät speichert und an die Datenvorrichtung gesendet, sondern auch Informationen über die Benutzung von Mautstraßen, wie z.B. gefahrene mautpflichtige Kilometer und / oder zu entrichtender Mautbetrag. Die Tarifberechnung findet in dieser Ausführungsform im mobilen Endgerät statt.

In einer weiteren Ausführungsform kann die Datenvorrichtung sehr einfach ausgeführt werden und benötigt keinen Datenspeicher zum Speichern der Bewegungsdaten In dieser Ausführungsform bleiben die Bewegungsdaten im mobilen Endgerät gespeichert, das mobile Endgerät erhält aber in regelmäßigen Abständen die Kennung der Datenvorrichtung - und damit den Bezug zum Fahrzeug - und versieht die gespeicherten Bewegungsdaten mit dieser Kennung. Nach einer bestimmten Zeit sendet das mobile Endgerät die neu gespeicherten Bewegungsdaten mitsamt der zugehörigen Kennung an das Hintergrundsystem.

Von besonderer Bedeutung in offenen Mauterhebungssystemen ist die Durchführbarkeit von Inspektionen, also die Verifikation, dass die Nutzer der mautpflichtigen Strecke ihrer Mautpflicht tatsächlich nachkommen. Beispielsweise kann ein Fahrzeug auf korrekte Systemnutzung inspiziert werden mittels Inspektionsfahrzeugen mit UHF-Senden. Ein UHF-Sender der Frequenz 433 - 950 MHz hat eine Reichweite von typischerweise einigen Metern. Das vorgestellte Inspektionsverfahren macht sich dies zu Nutze: Ein Inspektionsfahrzeug sendet mittels eines UHF-Senders ein spezifisches UHF-Signal in Richtung der Datenvorrichtung des zu inspizierenden Fahrzeugs. Der UHF-Sender kann dabei im Inspektionsfahrzeug fest eingebaut sein oder von einem Beifahrer des Inspektionsfahrzeugs in der Hand gehalten werden ("UHF-Pistole"). Die Datenvorrichtung empfängt das Signal. Das Signal wird vom Microcontroller als aktuell durchzuführende Inspektion interpretiert. Der Microcontroller wertet nun den Zustand der Datenvorrichtung aus: Falls die Datenvorrichtung mit einem mobilen Endgerät mit eingeschalteter App in Verbindung steht, ist das inspizierte Fahrzeug ordnungsgemäß mit eingeschaltetem Mauterfassungssystem unterwegs; folglich wird eine grüne LED an der Datenvorrichtung veranlasst, für eine bestimmte Zeit zu leuchten oder ein- oder mehrfach zu blinken. Falls die Datenvorrichtung nicht mit einem mobilen Endgerät mit eingeschalteter App in Verbindung steht, ist das Fahrzeug ordnungswidrig ohne eingeschaltetes Mauterfassungssystem unterwegs; folglich wird eine rote LED veranlasst, für eine bestimmte Zeit zu leuchten oder ein- oder mehrfach zu blinken. Da die Datenvorrichtung so an den Scheiben des Fahrzeugs angebracht ist, dass sie von außen sichtbar ist, kann das Leuchtsignal (grün oder rot) von den Kontrolleuren in ihrem Inspektionsfahrzeug wahrgenommen werden, und entsprechende Maßnahmen können eingeleitet werden.

Weitere Inspektionen können anhand von stationären oder ambulant eingerichteten Kontrollpunkten durchgeführt werden. Hierbei kann ein Kontrolleur mittels eines kontaktlosen Lesegeräts, z.B. mittels 13.56 MHz NFC-Transpondertechnik, eine bestimmte Anzahl Datensätze aus der Datenvorrichtung des stehenden Fahrzeugs auslesen, so dass sicher bestimmt werden kann, dass das Fahrzeug bereits vor Erreichen des Kontrollpunkts ordnungsgemäß mit eingeschalteter App unterwegs war und dass nicht etwa der Fahrer beim erst beim Erkennen des Kontrollpunkts die App eingeschaltet hat.

Die Datenvorrichtung ist im Wesentlichen rechteckig ausgeführt und so gestaltet, dass sie an der Innenseite einer Fahrzeug-Scheibe befestigt werden kann; die Fläche der Datenvorrichtung entspricht etwa der einer Autobahnvignette, die Dicke beträgt weniger als 10 mm.

Auf der Innenseite, das ist die Seite, die in den Innenraum des Fahrzeugs weist, wenn die Datenvorrichtung an einer Fahrzeug-Scheibe angebracht ist, sind wenigstens eine rote Leuchtdiode und eine grüne Leuchtdiode sichtbar.

Auf der Außenseite, das ist die Seite, die in nach außerhalb des Fahrzeugs weist, wenn die Datenvorrichtung an einer Fahrzeug-Scheibe angebracht ist, sind die rote Leuchtdiode und die grüne Leuchtdiode ebenfalls sichtbar. Die Außenseite weist Befestigungsmittel auf, mit denen die Datenvorrichtung an einer Scheibe befestigt werden kann. Darüber hinaus kann die Außenseite mit Solarzellen bestückt sein, die über eine elektrische Kontaktierung mit der Spannungsversorgung der Datenvorrichtung verbunden sind. Die Datenvorrichtung wird dabei entweder über die Solarzellen oder über eine Batterie betrieben, je nach Lichtverhältnissen.

Ferner ist die Datenvorrichtung so aufgebaut, dass die Batterie über einen Bewegungssensor mit einem Microcontroller verbunden ist, dergestalt, dass die Datenvorrichtung in Betrieb geht, sobald durch den Bewegungssensor eine Bewegung festgestellt wird. Die Datenvorrichtung bleibt für einen Zeitraum von mehreren Minuten nach der letzten vom Bewegungssensor festgestellten Bewegung in Betrieb. Wird für mehr als eine bestimmte Anzahl Minuten keine Bewegung festgestellt, so schaltet sich die Datenvorrichtung aus. Dieses Energiemanagement sorgt dafür, dass die Datenvorrichtung eines in Fahrt befindlichen Fahrzeugs ordnungsgemäß Bewegungsdaten von einem mobilen Endgerät entgegennimmt, dass aber bei Stillstand des Fahrzeug - was für die meisten privaten PKW rund 95% der Zeit der Fall ist - keine Energie verbraucht wird.

Weiter verfügt die Datenvorrichtung über einen Uhrenbaustein, einen Speicherbaustein zum Speichern der vom mobilen Endgerät erhaltenen Daten, und eine Datenschnittstelle, mittels derer die Datenvorrichtung Daten mit einem mobilen Endgerät austauschen kann. Die Datenverbindung kann drahtlos gemäß dem Bluetooth-Standard funktionieren, aber auch jede andere Datenverbindung mit einem im Innenraum des Fahrzeugs befindlichen mobilen Endgerät ist im Sinne der Erfindung nutzbar. Ebenfalls ist eine drahtgebundene Schnittstelle zwischen mobilem Endgerät und Datenvorrichtung möglich, insbesondere eine USB-Schnittstelle. Als mobile Endgeräte kommen insbesondere Smartphones oder Tablets in Frage, es ist aber auch denkbar, dass Nutzer ohne Smartphone ein eigens für diesen Zweck verfügbares dezidiertes Endgerät verwenden. Ein solches dezidiertes Endgerät muss drei Wesentliche Anforderungen erfüllen: Es muss erstens Positionsdaten über GPS oder ein anderes Positionierungssystem bestimmen können. Es muss zweitens Daten mit der Datenvorrichtung austauschen können. Dritten muss es in der Lage sein, Daten durch ein mobiles Datennetzwerk an ein Hintergrundsystem zu senden.

Weiter weist die Datenvorrichtung eine Transponderschnittstelle auf, welche sowohl im Nahfeld (13,56 MHz) als auch im Fernfeld (Ultra High Frequecy, UHF: 433 - 950 MHz)) arbeitet. Darüber hinaus verfügt die Datenvorrichtung über wenigstens eine rote Leuchtdiode und eine grüne Leuchtdiode zur Statusanzeige.

Das Befestigungsmittel, mit dem die Datenvorrichtung auf einer Scheibe eines Fahrzeugs befestigt wird, ist mit wenigsten einer funktionalen Komponente der Datenvorrichtung so verbunden, dass diese Komponente beim Ablösen der Datenvorrichtung von der Scheibe aus der Datenvorrichtung herausgerissen wird. Die Datenvorrichtung wird damit unbrauchbar; sie kann also nicht zwischen zwei Fahrzeugen gewechselt werden.

Weitere Vorteile und Merkmale der Erfindung ergeben sich anhand der nachfolgenden Figurenbeschreibung. Es zeigen:
- Figur 1: schematisch eine Datenübertragung bei einer Ausführungsform eines erfindungsgemäßen Verfahrens;
- Figur 2: das Prinzip einer Inspektion eines Fahrzeugs, welches an einer Ausführungsform des erfindungsgemäßen Verfahrens teilnimmt;
- Figur 3: eine Ausführungsform einer erfindungsgemäßen Datenvorrichtung mit Sicht auf die bei bestimmungsgemäßer Verwendung in das Fahrzeuginnere weisenden Seite;
- Figur 4: die Datenvorrichtung gemäß Figur 3 mit Blick auf die bei bestimmungsgemäßer Verwendung zur Fahrzeugscheibe weisenden Seite; und
- Figur 5: die Datenvorrichtung gemäß Figur 4 in einem geöffneten Zustand, wobei die Einzelteile im Inneren schematisch dargestellt sind.

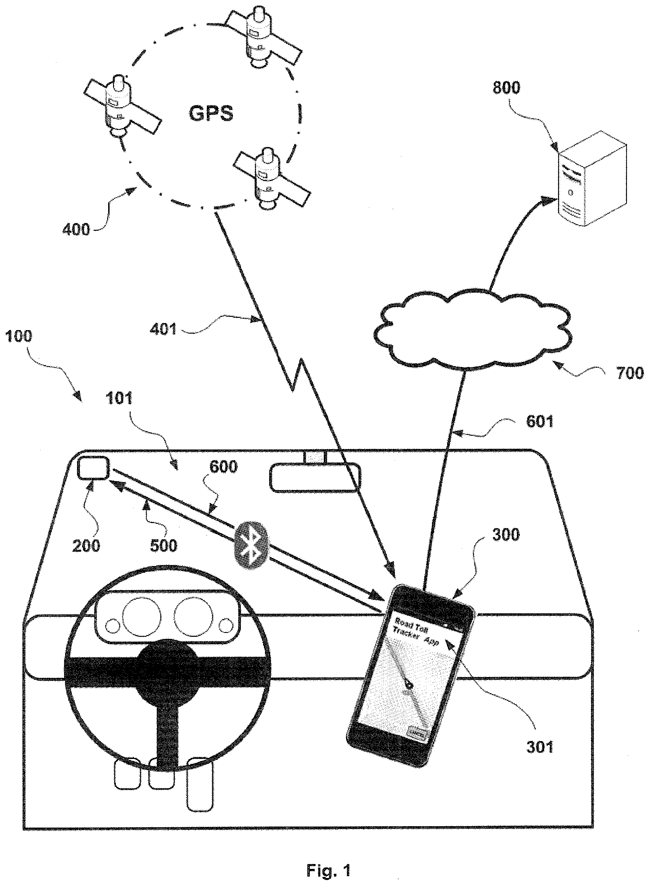

Figur 1 erläutert eine bevorzugte Ausführungsform für das erfindungsgemäße Verfahren: In einem PKW 100 ist an der Innenseite der Windschutzscheibe 101 eine Datenvorrichtung 200 angebracht, welche mit einem im PKW 100 mitgeführten mobilen Endgerät 300 über eine drahtlose Bluetooth Datenverbindung 500, 600 datentechnisch verbunden ist.

Auf dem mobilen Endgerät 300 ist eine mobile Applikation (App) 301 in Betrieb, welche mittels vom Global Positioning System GPS 400 empfangener Signale 401 den globalen Standort des mobilen Endgeräts 300 - und damit des PKW 100 - ermittelt.

Die Datenvorrichtung 200 ist im erfindungsgemäßen Mauterfassungssystem als zum Fahrzeug 100 gehörig registriert; im System ist zu jeder Datenvorrichtung eine eineindeutige Identitätsnummer, das Kraftfahrzeug-Kennzeichen und Zahlungsmittel - wie eine Bankverbindung oder eine Kreditkartennummer- hinterlegt. Diese Informationen werden im Hintergrundsystem 800 des Mauterfassungssystems vorgehalten und zur Abrechnung der Maut genutzt.

Wenn nun das mobile Endgerät 300 mit der eingeschalteten App 301 in Betrieb ist, dann sendet es über seine Bluetooth-Schnittstelle Daten 500. Wenn das mobile Endgerät 300 sich dabei im Fahrzeug 100 befindet, dann können diese Daten von der Datenvorrichtung 200 empfangen werden.

Daten 500, die vom mobilen Endgerät 300 an die Datenvorrichtung 200 gesendet werden, beinhalten dabei Positionsdaten gemäß GPS und einen Zeitstempel mit Datum und Uhrzeit zu jedem Positionsdatensatz.

Dabei empfängt die Datenvorrichtung 200 nicht ununterbrochen Daten. Nur dann, wenn das Fahrzeug 100 in Bewegung ist, empfängt die Datenvorrichtung 200 alle 60 Sekunden wenigstens einen Datensatz 500 (mit Positionsdaten gemäß GPS sowie Zeitstempel) vom mobilen Endgerät 300. Mittels eines Bewegungssensors ist die Datenvorrichtung 200 dabei in der Lage, zwischen den Zustanden "fahrend" und "nicht-fahrend" zu unterscheiden und überhaupt nur dann alle 60 Sekunden Daten zu empfangen, wenn sich das Fahrzeug bewegt.

Die Datenvorrichtung 200 speichert die von dem mobilen Endgerät 200 empfangen Daten 500 zusammen mit ihrer eigenen Identitätsnummer, so dass alle Datensätze als zu dieser Datenvorrichtung 200 gehörig - und damit als zum PWK 100 gehörig - in der Datenvorrichtung gespeichert sind.

Sobald die Datenvorrichtung 200 zehn neue Datensätze 500 vom mobilen Endgerät empfangen hat, sendet 600 sie diese neue Datensätze (nun versehen mit der eineindeutigen Identitätsnummer der Datenvorrichtung 200) über Bluetooth an das mobile Endgerät 300 zurück. Das mobile Endgerät leitet 601 diese Datensätze über ein mobiles Datennetz 700 an das Hintergrundsystem 800 weiter.

Am Hintergrundsystem 800 liegen nun Bewegungsdaten für die Datenvorrichtung 200 vor- und zwar ein Datensatz für alle 60 Sekunden. Da zur Datenvorrichtung 200 der PKW 100 registriert ist, ist am Hintergrundsystem 800 nun die Bewegung des PKW 100 bekannt, und es kann im Hintergrundsystem 800 die Fahrt das PKW zusammengesetzt werden und ermittelt werden, ob und wann welche mautpflichtigen Strecken benutzt werden. Daraus errechnet das Hintergrundsystem 800 die Mautbeträge und verrechnet sie mit den hinterlegten Zahlungsmitteln.

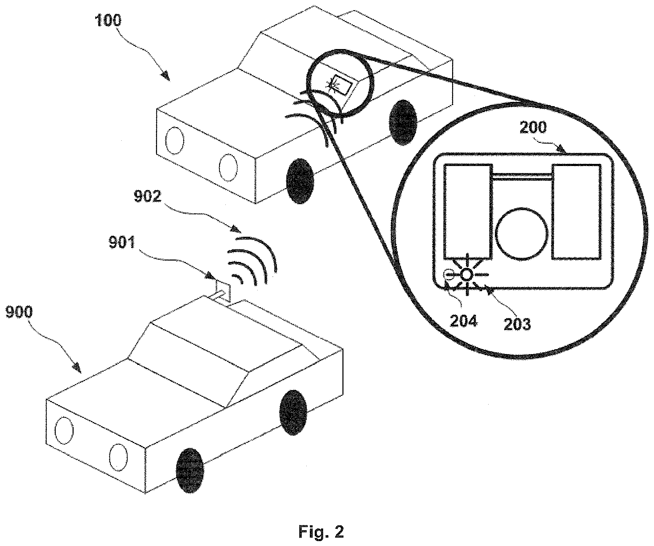

Figur 2 zeigt die Inspektion eines PKW 100 gemäß dem vorgestellten Verfahren. Ein Inspektionsfahrzeug 900 sendet mittels eines UHF-Senders 901 (433 - 950 MHz) ein spezifisches UHF-Signal 902 in Richtung der Datenvorrichtung 200 des zu inspizierenden PKW 100. Die Datenvorrichtung 200 empfängt das Signal 902. Das Empfangen des Signals 902 wird vom Microcontroller 209 als aktuell durchzuführenden Inspektion interpretiert. Der Microcontroller 209 wertet nun den Zustand der Datenvorrichtung 200 aus: Falls die Datenvorrichtung mit einem mobilen Endgerät 300 mit eingeschalteter App 301 in Verbindung steht, ist der PKW 100 ordnungsgemäß mit eingeschaltetem Mauterfassungssystem unterwegs; folglich wird die grüne LED 203 veranlasst, dreimal aufzublinken. Falls die Datenvorrichtung nicht mit einem mobilen Endgerät 300 mit eingeschalteter App 301 in Verbindung steht, ist der PKW 100 ordnungswidrig ohne eingeschaltetes Mauterfassungssystem unterwegs; folglich wird die rote LED 202 veranlasst, dreimal aufzublinken.

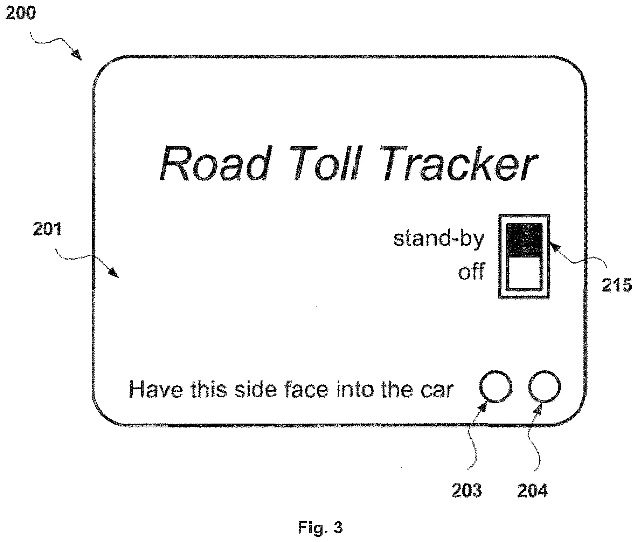

Figuren 3 bis 5 zeigen den Aufbau einer bevorzugten Ausführungsform der Datenvorrichtung 200. Die Datenvorrichtung ist im Wesentlichen rechteckig ausgeführt und so gestaltet, dass sie an der Innenseite einer PKW-Windschutzscheibe festigt werden kann; die Fläche der Datenvorrichtung entspricht etwa der einer Autobahnvignette, die Dicke beträgt weniger als 10 mm.

Figur 3 zeigt die Innenseite 201 der Datenvorrichtung 200, das ist die Seite, die in den Innenraum des PKW weist, wenn die Datenvorrichtung 200 an der Windschutzscheibe angebracht ist. Auf der Innenseite 201 sind eine rote Leuchtdiode 202 und eine grüne Leuchtdiode 203 sichtbar.

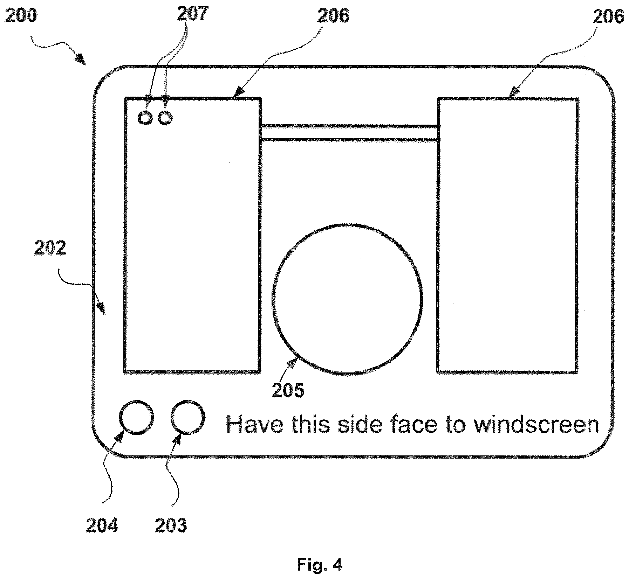

Figur 4 zeigt die Außenseite 202 der Datenvorrichtung 200, das ist die Seite, die in nach außerhalb des PKW weist, wenn die Datenvorrichtung 200 an der Windschutzscheibe angebracht ist. Auf der Außenseite 202 sind die rote Leuchtdiode 202 und die grüne Leuchtdiode 203 ebenfalls sichtbar. Die Außenseite 202 weist Befestigungsmittel 205 auf, mit denen die Datenvorrichtung 200 an der Windschutzscheibe befestigt werden kann. Darüber hinaus ist die Außenseite 202 mit Solarzellen 206 bestückt, die über eine elektrische Kontaktierung 207 mit einer Batterie 208 im Inneren der Datenvorrichtung verbunden sind.

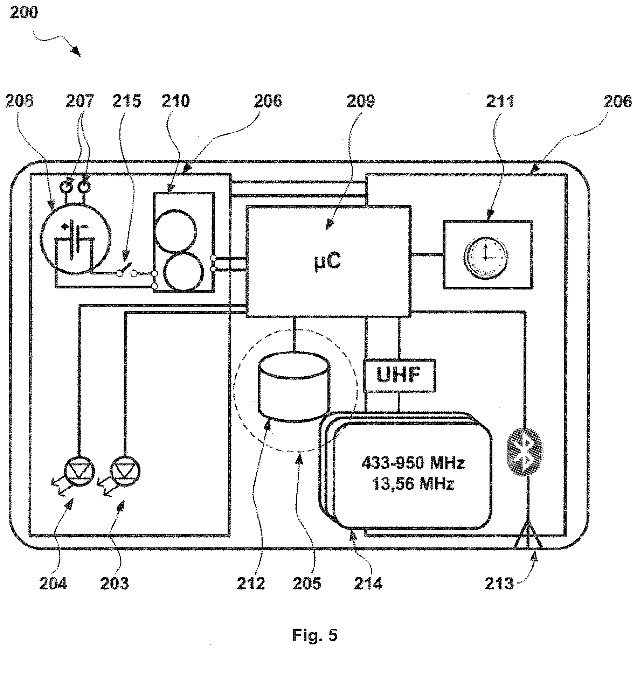

Figur 5 zeigt den inneren Aufbau einer bevorzugten Ausführungsform der Datenvorrichtung 200. Eine Batterie 208 ist über einen Bewegungssensor 210 mit einem Microcontroller 209 verbunden, dergestalt, dass die Datenvorrichtung 200 in Betrieb geht, sobald durch den Bewegungssensor 210 eine Bewegung festgestellt wird. Die Datenvorrichtung 200 bleibt für einen Zeitraum von 5 Minuten nach der letzten vom Bewegungssensor 210 festgestellten Bewegung in Betrieb. Wird für mehr als 5 Minuten keine Bewegung festgestellt, so schaltet sich die Datenvorrichtung 200 aus.

Ferner verfügt die Datenvorrichtung 200 über einen Uhrenbaustein 211, einen Speicherbaustein 212 zum Speichern der vom mobilen Endgerät erhaltenen Daten, eine kontaktlose Bluetooth-Schnittstelle 213, eine Transponderschnittstelle 214, welche sowohl im Nahfeld (13,56 MHz) als auch im Weitfeld (Ultra High Frequecy, UHF: 433 - 950 MHz)) arbeitet. Darüber hinaus verfügt die Datenvorrichtung 200 über eine rote Leuchtdiode 202 und eine grüne Leuchtdiode 203 zur Statusanzeige.

Das Befestigungsmittel 205, mit dem die Datenvorrichtung 200 auf der Windschutzscheibe des PKW befestigt wird, ist mit dem Speicher 212 dergestalt verbunden, dass beim Entfernen der Datenvorrichtung 200 von der Windschutzscheibe der Speicherbaustein 212 aus der Datenvorrichtung 200 herausgerissen wird. Die Datenvorrichtung wird damit unbrauchbar; sie kann also nicht zwischen zwei Fahrzeugen gewechselt werden.

### Bezugszeichen

- 100: Personenkraftwagen (PKW)
- 101: Windschutzscheibe
- 200: Datenvorrichtung
- 201: Innenseite der Datenvorrichtung
- 201: Außenseite der Datenvorrichtung
- 202: LED rot
- 203: LED grün
- 205: Befestigungsmittel
- 206: Solarzellen
- 207: elektrische Kontaktierung
- 208: Batterie
- 209: Microcontroller
- 210: Bewegungssensor
- 211: Uhr
- 212: Speicherbaustein
- 213: Bluetooth-Schnittstelle
- 214: Transponder-Schnittstelle
- 300: mobiles Endgerät
- 301: mobile Applikation (App)
- 400: Global Positioning System (GPS)
- 401: GPS Signal
- 500: Datenübertragung vom mobilen Endgerät zur Datenvorrichtung
- 600: Datenübertragung von der Datenvorrichtung zum mobilen Endgerät
- 601: Datenübertragung vom mobilen Endgerät zum Hintergrundsystem
- 700: mobiles Datennetzwerk
- 800: Hintergrundsystem
- 900: Inspektionsfahrzeug
- 901: UHF Sender (433 - 950 MHz)
- 902: UHF Signal

## Patentansprüche

1. Verfahren zur Erfassung der streckenabhängigen Benutzung von Fahrzeugen (100) unter Nutzung einer fest im Fahrzeug (100) installierten Datenvorrichtung (200), in welcher Fahrzeugidentifikationsdaten gespeichert sind, wobei es sich bei den Fahrzeugidentifikationsdaten um eine eineindeutige Kennung handelt, und einem vom Benutzer mitgeführten, im Fahrzeug befindlichen mobilen Endgerät (300), welche Datenvorrichtung (200) und Endgerät (300) eine datentechnische Kommunikationsverbindung (500, 600) herstellen können, wobei
- das mobile Endgerät (300), über eine mobile Applikation (App) auf dem mobilen Endgerät mittels eines Standortbestimmungssystems des mobilen Endgerätes Positionsdaten ermittelt und diese zusammen mit einem Zeitstempel als Positionsdatensätze an die Datenvorrichtung sendet,
- die Datenvorrichtung mittels eines Bewegungssensors die Zustände "fahrend" und "nicht fahrend" unterscheidet und ausgelegt ist, nur dann die datentechnische Kommunikationsverbindung zu aktivieren, wenn der Zustand "fahrend" ist,
- die Datenvorrichtung im Zustand "fahrend" in periodischen Abständen wenigstens einen Positionsdatensatz vom mobilen Endgerät empfängt,
- die Datenvorrichtung (200) jeden empfangenen wenigstens einen Positionsdatensatz mit den Fahrzeugidentifikationsdaten kombiniert und als gemeinsamen Datensatz speichert,
- die Datenvorrichtung (200) nach einem vorgegebenen Fahrzeitintervall die gespeicherten gemeinsamen Datensätze an das mobile Endgerät (300) sendet und
- das mobile Endgerät (300) empfangene gemeinsame Datensätze über ein mobiles Datennetz (700) an ein Hintergrundsystem (800) weiterleitet.

2. Verfahren nach einem der vorangehenden Ansprüche, **dadurch gekennzeichnet, dass** die gemeinsamen Datensätze periodisch an das Hintergrundsystem (800) übertragen werden.

3. Verfahren nach einem der vorangehenden Ansprüche, **dadurch gekennzeichnet, dass** eine bestimmungsgemäße Kommunikationsverbindung zwischen dem mobilen Endgerät (300) und der Datenvorrichtung (200) durch die Datenvorrichtung (200) signalisiert wird.

4. Verfahren nach Anspruch 3, **dadurch gekennzeichnet, dass** die Signalisierung durch ein von der Datenvorrichtung (200) empfangbares, elektromagnetisches Signal (902) aktiviert wird.

5. Verfahren nach einem der vorangehenden Ansprüche, **dadurch gekennzeichnet, dass** in Abhängigkeit von den gemeinsamen Datensätzen im Hintergrundsystem (800) und/oder im mobilen Endgerät (300) eine zurückgelegte Strecke berechnet wird, wobei gegebenenfalls die gemeinsamen Datensätze mit gespeicherten Kartendaten kombiniert werden.

6. Datenvorrichtung (200) zur Verwendung in einem Verfahren nach einem der vorangehenden Ansprüche, mit einem Mittel (205) zur Befestigung in einem Fahrzeug (100), wobei das Mittel (205) derart ausgebildet ist, dass beim Lösen des Mittels (205) zumindest ein für einen bestimmungsgemäßen Betrieb der Datenvorrichtung (200) erforderliches Bauteil zerstört wird, und mit einem Microcontroller, einer Batterie, einem Bewegungssensor (210), einer Datenschnittstelle (213) zur Kommunikation mit einem mobilen Endgerät (300) eines Benutzers und einem Speicherbaustein zum Speichern von Datensätzen, wobei der Microcontroller über den Bewegungssensor zum Betrieb der Datenvorrichtung in Abhängigkeit vom Bewegungszustand des mit der Datenvorrichtung (200) ausgestatteten Fahrzeugs mit der Batterie verbunden ist, und wobei der Microcontroller mit der Datenschnittstelle und dem Speicherbaustein verbunden und zum Durchführen der Datenvorrichtungsverfahrensschritte in einem Verfahren nach einem der Ansprüche 1-5 ausgebildet ist..

7. Datenvorrichtung nach Anspruch 6, **gekennzeichnet durch** eine Leuchtdiode (202), (203) zur Signalisierung einer ordnungsgemäßen Kommunikationsverbindung zwischen dem mobilen Endgerät (300) und der Datenvorrichtung (200).

8. Datenvorrichtung nach einem der Ansprüche 6 oder 7, **gekennzeichnet durch** eine Solarzelle (206) zur autarken Energieversorgung.

## Claims

1. A method for detecting the distance-dependent usage of vehicles (100) using a data device (200) that is fixedly installed in the vehicle (100), in which data device (200) vehicle identification data are stored, wherein the vehicle identification data are an unequivocal identifier, and a mobile terminal (300) carried along by the user and being present in the vehicle, which data device (200) and mobile terminal (300) can establish a data communication connection (500, 600), wherein
- the mobile terminal (300) determines position data via a mobile application (app) on the mobile terminal by means of a satellite location system of the mobile terminal and sends them together with a timestamp as position data sets to the data device,
- the data device distinguishes the conditions "moving" and "not moving" by means of a motion sensor and it is configured to only activate the data communication connection, if the condition is "moving",
- in the condition "moving" the data device receives at least one position data set from the mobile terminal in periodic intervals,
- the data device (200) combines each received at least one position data set with the vehicle identification data and stores them as common data set,
- the data device (200) sends the stored common data sets to the mobile terminal (300) after a predetermined driving time interval and
- the mobile terminal (300) forwards received common data sets via a mobile data network (700) to a background system (800).

2. A method according to one of the preceding claims, **characterized in that** the common data sets are periodically transmitted to the background system (800).

3. A method according to one of the preceding claims, **characterized in that** an appropriate communication connection between the mobile terminal (300) and the data device (200) will be signalized by the data device (200).

4. A method according to claim 3, **characterized in that** the signalization will be activated by an electromagnetic signal (902) that can be received by the data device (200).

5. A method according to one of the preceding claims, **characterized in that** in dependence on the common data sets in the background system (800) and/or in the mobile terminal (300) a travelled distance will be calculated, wherein the common data sets will be possibly combined with stored map data.

6. A data device (200) for the use in a method according to one of the preceding claims, comprising a means (205) for fastening the device in a vehicle (100), wherein the means (205) is configured such that in case of detaching the means (205) at least one component required for an appropriate operation of the data device (200) will be destroyed, and comprising a microcontroller, a battery, a motion sensor (210), a data interface (213) for communicating with a mobile terminal (300) of a user and a memory module for storing data sets, wherein the microcontroller is connected with the battery via the motion sensor for operating the data device in dependence on the movement status of the vehicle equipped with the data device (200), and wherein the microcontroller is connected with the data interface and the memory module and is configured to carry out the data device process steps in a method according to one of the claims 1-5.

7. A data device according to claim 6, **characterized by** a light-emitting diode(202), (203) for signalizing an appropriate communication connection between the mobile terminal (300) and the data device (200).

8. A data device according to one of the claims 6 or 7, **characterized by** a photovoltaic cell (206) for the self-sufficient energy supply.

## Revendications

1. Procédé de détection de l'utilisation de véhicules (100) en fonction de la distance en utilisant un dispositif de données (200) fixement installé dans le véhicule (100), dans lequel dispositif de données (200) sont stockées des données d'identification de véhicule, les données d'identification de véhicule étant un identifiant univoque, et un terminal mobile (300) emmené par l'utilisateur et se trouvant dans le véhicule, lequel dispositif de données (200) et lequel terminal (300) peuvent établir une connexion de communication (500, 600), dans lequel
- le terminal mobile (300) détermine des données de position via une application mobile (App) sur le terminal mobile par moyen d'un système de localisation du terminal mobile et les envoie ensemble avec un horodatage en tant que jeux de données de position au dispositif de données,
- le dispositif de données distingue entre les états « en mouvement » et « en arrêt » par moyen d'un capteur de mouvement et il est configuré pour n'activer la connexion de communication de données que si l'état est « en mouvement »,
- à l'état « en mouvement » le dispositif de données reçoit au moins un jeu de données de position du terminal mobile dans des intervalles périodiques,
- le dispositif de données (200) combine chaque au moins un jeu de données de position reçu avec les données d'identification de véhicule et les stocke en tant que jeu de données commun,
- le dispositif de données (200) envoie les jeux de données communs stockés au terminal mobile (300) après un intervalle de durée de trajet prédéterminé et
- le terminal mobile (300) retransmet des jeux de donnés communs reçus via un réseau de données mobile (700) à un système d'arrière-plan (800).

2. Procédé selon l'une des revendications précédentes, **caractérisé en ce que** les jeux de données communs sont périodiquement transmis au système d'arrière-plan (800).

3. Procédé selon l'une des revendications précédentes, **caractérisé en ce qu'**une connexion de communication adéquate entre le terminal mobile (300) et le dispositif de données (200) est signalisée par le dispositif de données (200).

4. Procédé selon la revendication 3, **caractérisé en ce que** la signalisation est activée par un signal électromagnétique (902) susceptible d'être reçu par le dispositif de données (200).

5. Procédé selon l'une des revendications précédentes, **caractérisé en ce qu'**en fonction des jeux de données communs dans le système d'arrière-plan (800) et/ou dans le terminal mobile (300) une distance parcourue est calculée, dans lequel les jeux de données communs sont, le cas échéant, combinés avec des données de carte stockées.

6. Dispositif de données (200) destiné à l'utilisation dans un procédé selon l'une des revendications précédentes, comprenant un moyen (205) de fixation du dispositif dans un véhicule (100), le moyen (205) étant configuré de sorte que si le moyen (205) est détaché, au moins un composant nécessaire pour le fonctionnement correct du dispositif de données (200) sera détruit, et comprenant un microcontrôleur, une batterie, un capteur de mouvement (210), une interface de données (213) pour la communication avec un terminal mobile (300) d'un utilisateur et un module de mémoire pour stocker des jeux de données, dans lequel le microcontrôleur est relié à la batterie via le capteur de mouvement pour faire fonctionner le dispositif de données en fonction de l'état de mouvement du véhicule équipé du dispositif de données (200), et dans lequel le microcontrôleur est relié à l'interface de données et au module de mémoire et il est configuré pour exécuter les étapes de procédé du dispositif de données dans un procédé selon l'une des revendications 1 à 5.

7. Dispositif de données selon la revendication 6, **caractérisé par** une diode électroluminescente (202), (203) pour signaliser une connexion de communication correcte entre le terminal mobile (300) et le dispositif de données (200).

8. Dispositif de données selon l'une des revendications 6 ou 7, **caractérisé par** une cellule photovoltaïque (206) pour l'approvisionnement en énergie autonome.
